(19) Europäisches Patentamt

European Patent Office

Office européen des brevets

(11) **EP 1 085 346 B1**

(12) **EUROPÄISCHE PATENTSCHRIFT**

(45) Veröffentlichungstag und Bekanntmachung des Hinweises auf die Patenterteilung:
**20.03.2002 Patentblatt 2002/12**

(51) Int Cl.⁷: **G01S 17/95**

(21) Anmeldenummer: **00118641.0**

(22) Anmeldetag: **29.08.2000**

(54) **Verfahren zur Messung der Entfernung von Objekten, atmosphärischen Partikeln und dergleichen mittels Lidar- oder Laserradar-Signalen**

Method for determining the distance of objects, atmospheric particles and the like using Lidar- or Laserradar signals

Procédé pour mesurer la distance d'un objet, de particules atmospheriques et similaires utilisant des signaux de Lidar ou Radar à laser

(84) Benannte Vertragsstaaten:
**AT BE CH CY DE DK ES FI FR GB GR IE IT LI LU MC NL PT SE**

(30) Priorität: **19.09.1999 DE 19944795**
**12.01.2000 DE 10001015**

(43) Veröffentlichungstag der Anmeldung:
**21.03.2001 Patentblatt 2001/12**

(73) Patentinhaber: **Deutsches Zentrum für Luft- und Raumfahrt e.V.**
**53175 Bonn (DE)**

(72) Erfinder:
• **Streicher, Jürgen**
**82278 Althegnenberg (DE)**
• **Klier, Michael**
**82178 Puchheim (DE)**
• **Werner, Christian, Dr.**
**81243 München (DE)**
• **Stockhausen, Norbert, Prof. Dr.**
**81541 München (DE)**

(74) Vertreter: **von Kirschbaum, Albrecht, Dipl.-Ing. Patentanwalt,**
**Postfach 15 20**
**82102 Germering (DE)**

(56) Entgegenhaltungen:
**DE-C- 19 642 967        US-A- 5 394 155**

• **KRICHBAUMER W ET AL: "CURRENT STATE-OF-THE-ART OF LIDAR INVERSION METHODS FOR ATMOSPHERES OF ARBITRARY OPTICAL DENSITY" APPLIED PHYSICS B: LASERS AND OPTICS,DE,SPRINGER INTERNATIONAL, BERLIN, Bd. B59, Nr. 5, 1. November 1994 (1994-11-01), Seiten 517-523, XP000487498 ISSN: 0946-2171**
• **ROY G ET AL: "Lidar-inversion technique based on total integrated backscatter calibrated curves" APPLIED OPTICS,US,OPTICAL SOCIETY OF AMERICA,WASHINGTON, Bd. 32, Nr. 33, 20. November 1993 (1993-11-20), Seiten 6754-6763, XP002123708 ISSN: 0003-6935**
• **COLLIS R T H ET AL: "Mie scattering techniques for air pollution measurement with lasers" OPTO ELECTRONICS,GB,CHAPMAN AND HALL. LONDON, Bd. 4, Nr. 2, Mai 1972 (1972-05), Seiten 87-99, XP002123707**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Messung der Entfernung von Objekten, atmosphärischen Partikeln und dergleichen in einem lichtstrahlungsdurchlässigen Medium mittels Lidar- oder Laserradar-Signalen, die jeweils nach vorhergehender Laser-Impulsaussendung als reflektierte oder rückgestreute Signale empfangen werden und die genauso wie die Formen der jeweils ausgesendeten Impulse abgetastet und digitalisiert werden.

Ein solches Verfahren ist aus der DE 19642967 bekannt.

Der Begriff LIDAR (LIght Detection And Ranging) stellt das optische Synonym zum allgemein bekannten Radar dar und beschreibt lasergestützte Fernmeßverfahren, die zur Erfassung von atmosphärischen Parametern eingesetzt werden können. Die erste Anwendung der Lidar-Technologie war entsprechend dem Radar die Abstandsmessung von großflächigen Zielobjekten (Targets). Die Weiterentwicklung der Lidar-Technik führte über die Messung der Entfernung von diffusen Streuern, z.B. von Wolken (Wolkenhöhenmesser), zu der entfernungsaufgelösten Bestimmung der Trübung der Atmosphäre (Sichtweitenmeßgerät).

Die Miniaturisierung der ersten Prototypen ergab schließlich kompakte und somit mobile Lidar-Systeme, die in einem Meßbus oder sogar PKW Platz fanden. Das Problem der Gefährdung der Augen durch die hochenergetische Laserstrahlung wurde durch den Einsatz von schnell pulsenden, aber mit geringer Leistung emittierenden Laserdioden gelöst.

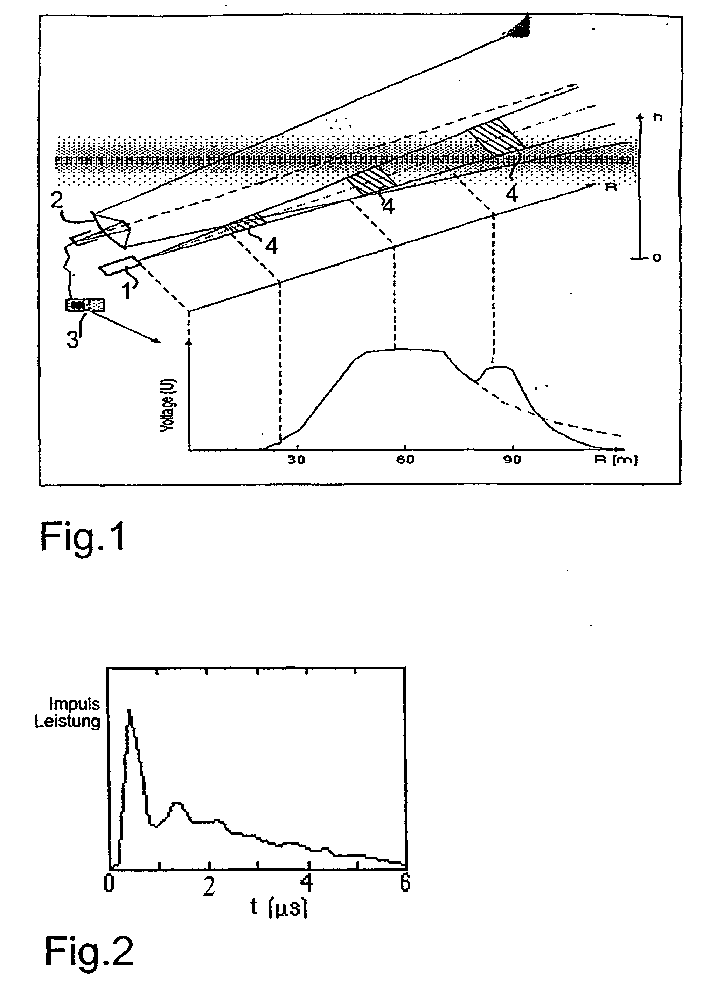

Lidar-Systeme verwenden im Gegensatz zu lasergestützten Langpfad-Absorptionsgeräten keine topographischen Ziele, um die emittierte Laserstrahlung registrieren zu können, sondern die Rückstreuung an winzigen Partikeln (Aerosolen), die ständig in der Atmosphäre enthalten sind (Mie-Streuung), bzw. an den Molekülen der atmosphärischen Hauptkonstituenten selbst (Rayleighstreuung). Die Funktion eines Lidar-Systems ist schematisch in Fig.1 dargestellt.

Ein Lidar-System, wie es in Fig.1 dargestellt ist, hat drei Hauptkomponenten, einen Sender 1, der Laserlicht emittiert, einen Empfänger 2, der die zurückgestreute Strahlung erfaßt, und eine Wandelungselektronik 3, die aus der empfangenen Lichtmenge ein auswertbares Signal produziert. Der Sender 1 strahlt kurze Lichtimpulse 4 in der Größenordnung von einigen Nanosekunden schräg nach oben aus. Die Höhe vom Boden aus ist mit h und die Entfernung mit R bezeichnet. Die paketartigen Lichtimpulse 4 werden entlang ihres Weges durch die Atmosphäre von Partikeln (Staub, Wassertröpfchen etc.) zurückgestreut und treffen remittiert nach einer gewissen Zeit wieder beim Empfänger 2 ein.

Aufgrund der verstrichenen Zeit kann somit das Entfernungsvolumen, in dem die Streuung stattfand, auf eine halbe (Hin- und Rückweg) Impulslänge des Lichtes genau lokalisiert werden. Die im jeweiligen Entfernungsintervall empfangene, reflektierte Lichtmenge ist dann ein Maß für die Anzahl der Partikel, die für eine Trübung der Atmosphäre verantwortlich sind. Die empfangene Intensität wird vom Detektor in ein elektrisches Signal gewandelt, welches nach Verstärkung digitalisiert wird. Die Digitalwerte werden in einen Rechner übertragen in dem die weitere Auswertung erfolgt.

In Fig.1 ist im unteren Teil ein typisches Lidar-Empfangssignal skizziert, wobei drei Ereignisse erkennbar sind:

- bis etwa 30 Meter Entfernung (R = 30 m) ist keine Strahlung zu erfassen. Der Empfänger 2 kann kein Licht vom Sender 1 sehen, da der Sendekegel noch nicht in den Empfangskegel eingetreten ist. Dieser tote Bereich hängt von der Öffnung sowie dem Abstand der Sende und Empfangsoptik ab.
- Bei 60 Meter Entfernung (R = 60 m) bildet sich ein Maximum aus, welches der normalen Trübung (Sichtweite) der Atmosphäre entspricht.
- Bei 90 Metern (R = 90 m) erscheint ein weiteres Maximum, welches die Schichtung der Atmosphäre (Nebelbank) wiederspiegelt. Ohne Schichtung wäre der Signalverlauf der gestrichelten Linie gefolgt.

Die Menge der empfangenen Strahlung ist, wie in Fig.1 skizziert, von der Anzahl der Streuer und der Dämpfung der Atmosphäre abhängig, d.h. je mehr Streuer, beispielsweise Nebeltropfen, vorhanden sind, desto größer ist die Amplitude der Empfangsgröße. Diese quantitative Aussage reicht aber nicht immer aus, um die Qualität der Rückstreuung und somit die tatsächliche Sichtweite zu bestimmen. Die Rückstreueigenschaften der Partikel würden bei der quantitativen Bestimmung der Sichtweite (Messung der Maximalintensitäten) eine zu große Rolle spielen.

So würde beispielsweise ein winziger Tripelspiegel (Katzenauge) dem System eine stabile Wand vortäuschen. Die Trübung ist aber auch über eine andere Größe meßbar, nämlich durch die Dämpfung der Atmosphäre. Diese spiegelt sich in der negativen Steigung der Meßkurve wieder. Diese Tatsache ist auch Fig.1 zu entnehmen. Ohne zusätzliche Trübung im Beispiel durch die Nebelbank würde die Meßkurve nämlich der gestrichelten Linie folgen. Die Nebelbank bewirkt aber eine stärkere Dämpfung und somit einen steileren Abfall der Kurve.

Im Falle der einfachen Streuung des Laserlichts an den Partikeln der Atmosphäre, d.h. die einmalige Rückwärtsstreuung an beispielsweise Staubkörnern oder Wassertröpfchen, kann das Empfangssignal von Fig.1 mit der folgenden Lidargleichung beschrieben werden:

$$U(R) = \xi(R)\frac{k}{R^2}\beta\tau^2, \tag{1}$$

wobei k ein Geräteparameter ist, der die Ausgangsleistung des Lasers, die Empfangsfläche und Verstärkungsfaktoren usw. beinhaltet, $\xi(R)$ die optische Überlappfunktion, R die Meßentfernung (Hin- und Rücklaufzeit des Lichts), $\beta$ der Volumenrückstreukoeffizient und $\tau$ die Transmission der Atmosphäre sind. $\beta\tau^2$ stellt somit die zu bestimmende Meßgröße (Trübung bzw. Konzentration) dar, die auch beschrieben werden kann durch:

$$\tau^2 = \exp\left(-2\int_0^R \sigma(r)dr\right), \tag{2}$$

wobei $\sigma(r)$ die lokale Extinktion ist, und

$$\beta(R) = \frac{P(R, \Theta = \pi)}{4\pi}\sigma(R) \tag{3}$$

mit P(R) als der Rückstreuphasenfunktion.

Die Rückstreuphasenfunktion beschreibt somit die Art der Streuung (beispielsweise Vorzugsrichtung) wie auch die Konzentration (Anzahl der Partikel im Luftgemisch). Die lokale Extinktion trägt zur Dämpfung durch Trübung wie auch Intensitätserhöhung durch Rückstreuung bei.

Für ein Lidar mit einem langen Puls wird die Information über die Streuung in einem Volumen für verschiedene Zeitintervalle erhalten. In Fig.2 ist als Beispiel in einem Diagramm, das einen Impulsleistungsverlauf in Abhängigkeit von der Zeit t zeigt, eine Impulsform dargestellt. Wenn dieser Impuls beispielsweise in drei Teile aufgeteilt wird, dann werden zu jeder Zeit im empfangenen Signal Informationen aus dem gesamten Puls erhalten.

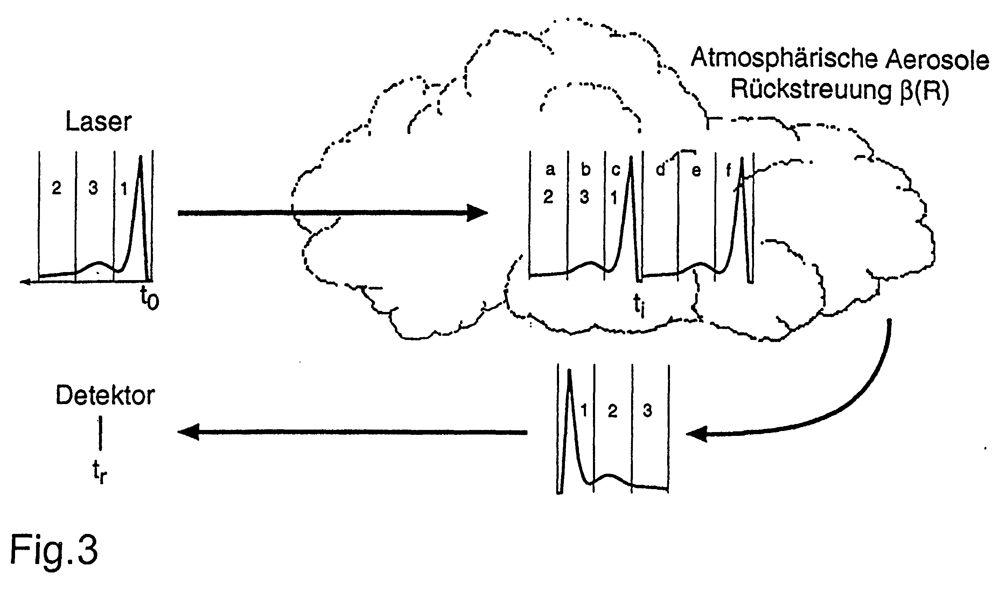

Ein Beispiel ist in der Fig.3 mit einer Wolke als Rückstreuobjekt verdeutlicht. Hierbei ist in der Fig.3 das Prinzip der Rückstreuung eines langen Lidar-Impulses veranschaulicht. Wenn der ausgesendete Lidar-Impuls somit in drei Teile 1, 2, 3 und das Wolkensignal in die Anteile a bis f als gleich lange Intervalle aufgeteilt ist, so wird nach einer Zeit t ein Signal erhalten. Ab einer Zeit $t+\Delta t$ wird der erste Teil des Laser-Impulses (L(1)) gestreut, und so weiter, wie nachstehend aufgelistet ist:

| Zeit | empfangene Strahlleistung |
|---|---|
| t | $P_r = 0$ |
| $t+2\Delta t$ | $P_r = L(1)\,a$ |
| $t+4\Delta t$ | $P_r = L(2)\,a + L(1)\,b$ |
| $t+6\Delta t$ | $P_r = L(3)\,a + L(2)\,b + L(1)\,c$ |
| $t+8\Delta t$ | $P_r = L(3)\,b + L(2)\,c + L(1)\,d$ |
| $t+10\Delta t$ | $P_r = L(3)\,c + L(2)\,d + L(1)\,e$ |
| $t+12\Delta t$ | $P_r = L(3)\,d + L(2)\,e + L(1)\,f$ |
| $t+14\Delta t$ | $P_r = L(3)\,e + L(2)\,f + L(1)g$ |
| $t+16\Delta t$ | $P_r = L(3)\,f + L(2)g$ |
| $t+18\Delta t$ | $P_r = L(3)g$ |
| $t+20\Delta t$ | $P_r = 0$ |

Ein diffuses (oder Aerosol-) Target bewirkt also in jedem Zeitintervall einen gemischten Beitrag des Laserimpulses mit den Streuern ($P_r = L(3)\,a + L(2)\,b + L(1)\,c$).

Wenn beispielsweise ein Hart-Target (Hauswand) an die Position b gebracht wird, werden folgende Beziehungen erhalten:

| Zeit | empfangene Strahlleistung |
|---|---|
| t | $P_r = 0$ |

(fortgesetzt)

| Zeit | empfangene Strahlleistung |
|---|---|
| t+2Δt | $P_r = 0$ |
| t+4Δt | $P_r = L(1)\ b$ |
| t+6Δt | $P_r = L(2)\ b$ |
| t+8Δt | $P_r = L(3)\ b$ |
| t+10Δt | $P_r = 0$ |

Wenn statt einer Hauswand ein Target, das aus zwei Netzen besteht, an den Punkten b und c aufgestellt wird, erhält man:

| Zeit | empfangene Strahlleistung |
|---|---|
| t | $P_r = 0$ |
| t+2Δt | $P_r = 0$ |
| t+4Δt | $P_r = L(1)\ b$ |
| t+6Δt | $P_r = L(2)\ b + L(1)\ c$ |
| t+8Δt | $P_r = L(3)\ b + L(2)\ c$ |
| t+10Δt | $P_r = L(3)\ c$ |
| t+12Δt | $P_r = 0$ |

Der kleinste Abstand zwischen b und c kann damit wiederhergestellt werden mit 2Δt. Zum Beispiel, wenn, 2Δt = 10 ns, ist die Entfernungsauflösung 1,5 m.

Bei den bekannten Lidar- und Laserradar-Systemen besteht das Problem, daß wegen der zeitlich unterschiedlichen Lasereigenschaften, insbesondere wegen der ständig wechselnden Lasertemperaturen, die ausgesendeten Laserimpulse keine einheitlich gleiche Form aufweisen, daß also kein Sendeimpuls gleich aussieht wie ein anderer. Dieser Sachverhalt führt zu dem nachteiligen Ergebnis, daß auch die empfangenen reflektierten und rückgestreuten Signale nicht einheitlich bewertbar sind und auch keine Rückschlüsse mehr auf den jeweils gesendeten Laserimpuls gezogen werden können, was dann zwangsläufig zu falschen Resultaten bei der nachfolgenden Empfangssignalauswertung führen muß.

Der Erfindung liegt deshalb die Aufgabe zugrunde, ein Verfahren zur Entfernungsmessung mittels Lidar- oder Laserradarsignalen so zu gestalten, daß es unabhängig von den wechselnden Formen der Laser-Sendeimpulse einwandfrei arbeitet und korrekte Entfernungsergebnisse liefert.

Gemäß der Erfindung, die sich auf ein Verfahren der eingangs genannten Art bezieht, wird diese Aufgabe dadurch gelöst, daß die Kreuzkorrelationsfunktion des abgetasteten und digitalisierten reflektierten bzw. rückgestreuten empfangenen Signals (Remissionssignal) mit dem vorher ausgesendeten, abgetasteten und digitalisierten Ausgangsimpuls einer inversen Filterung auf der Basis des Autoenergiespektrums der individuellen Ausgangsimpulse unter Verwendung eines Signalmodells auf der Basis von Gauß-Funktionen unterzogen wird und daß diskrete Korrekturfaktoren aus dem Autoenergiespektrum des Ausgangsimpulses gewonnen und zur Korrektur des Betrags des Kreuzenergiespektrums genutzt werden, so daß die Kreuzkorrelationsfunktion als Folge von Gauß-Impulsen definierter Breite erscheint und jeweils an der Position eines Reflexions- oder Rückstreuereignisses einen Gauß-Impuls mit definierter Breite aufweist.

Das erfindungsgemäße Verfahren der inversen Filterung von Lidar- oder Laserradarsignalen läßt sich in vorteilhafter Weise dazu benutzen, die Unsicherheiten der bekannten Lidar- und Laserradarmethoden zu beseitigen.

Durch die mathematische Anpassung von Gauss-Impulsen an die invers gefilterte Kreuzkorrelationsfunktion wird eine Steigerung der Entfernungsauflösung gegenüber der Start-Stop-Methode oder gegenüber der konventionellen Lidartechnik erzielt.

Das Verfahren nach der Erfindung bringt die vorteilhafte Möglichkeit, daß bei der Lidar- bzw. Laserradarmessung zwischen Hart-Targets und Softtargets unterschieden werden kann.

Das Verfahren nach der Erfindung kann in vorteilhafter Weise auf Doppler-Lidar-Signale erweitert werden.

Vorteilhafte und zweckmäßige Weiterbildungen und Varianten des Verfahrens nach der Erfindung sind in den Unteransprüchen angegeben.

Die Erfindung wird im folgenden anhand von Zeichnungen im einzelnen erläutert. Es zeigen:

Fig.1 die bereits beschriebene schematische Darstellung eines Rückstreu-Lidars;

| Fig.2 | die ebenfalls bereits beschriebene graphische Darstellung einer angenommenen Lidar-Sendeimpulsform; |
| Fig. 3 | die ebenfalls schon vorher beschriebene Darstellung des Prinzips der Rückstreuung eines langen Lidar-Impulses; |
| Fig.4 | in einem Ablaufplan das Prinzip des Verfahrens mit inverser Filterung nach der Erfindung; |
| Fig.5a | den zeitlichen Verlauf eines Lidar-Signals; |
| Fig.5b | darunter den zeitlichen Verlauf eines zugehörigen Lidar-Sendeimpulses, der zu Beginn (zwischen MIN und MAX) des in Fig.5a dargestellten Lidar-Signals abgetastet wird; |
| Fig.6 | die Autokorrelationsfunktion (AKF) eines Lidar-Impulses (durchgezogene Linie) und die durch inverse Filterung gebildete Autokorrelationsfunktion (gepunktete Linie); |
| Fig.7a | einen Gauß-Impuls x(t) im Zeitbereich; |
| Fig.7b | einen entsprechenden Gauß-Impuls im Frequenzbereich; |
| Fig.8 | das Autoenergiespektrum des in der Fig.5a zu Beginn und in der Fig.5b in abgetasteter Form dargestellten Lidar-Sendeimpulses und einen daraus abgeleiteten gaußförmigen Spektralverlauf; |
| Fig.9a | das Faltungsergebnis eines Großimpulses mit einer Diracimpuls-Folge bei einem Abstandsintervall $X = 2 \cdot \sigma$ ($\sigma$ = Standardabweichung); |
| Fig.9b | das Faltungsergebnis eines Großimpulses mit einer Diracimpuls-Folge bei einem Abstandsintervall $X = \sigma$; |
| Fig.10 | das Faltungsergebnis mit unterschiedlich gewichteten Dirac-Impulsen bei einem Intervall $X = \sigma$; |
| Fig.11a | einen mit einem herkömmlichen Lidar gemessenen Signalverlauf bei Schneefall; |
| Fig.11b | einen Ausschnitt aus diesem Signalverlauf zwischen MIN und MAX in digitalisierter Form; |
| Fig.12 | in einer graphischen Darstellung das Ergebnis der inversen Filterung eines Schneefallsignals (gemitteltes Signal); |
| Fig.13 | einen Ablaufplan des Verfahrens mit inverser Filterung von Lidar-Signalen nach der Erfindung; |
| Fig.14 | eine Anordnung zur Testmessung von Hart-Targets; |
| Fig.15 | eine invers gefilterte und dezimierte Kreuzkorrelationsfunktion des in Fig.5a und 5b gezeigten Lidar-Impulses mit einem Rückstreusignal; |
| Fig.16a, 16b und 16c | invers gefilterte Kreuzkorrelationsfunktionen bei unterschiedlichen Netzabständen, und |
| Fig.17 | die durch mathematische Anpassung von Gauß-Impulsen erzielte Restvarianz als Funktion der Anzahl von Gauß-Impulsen. |

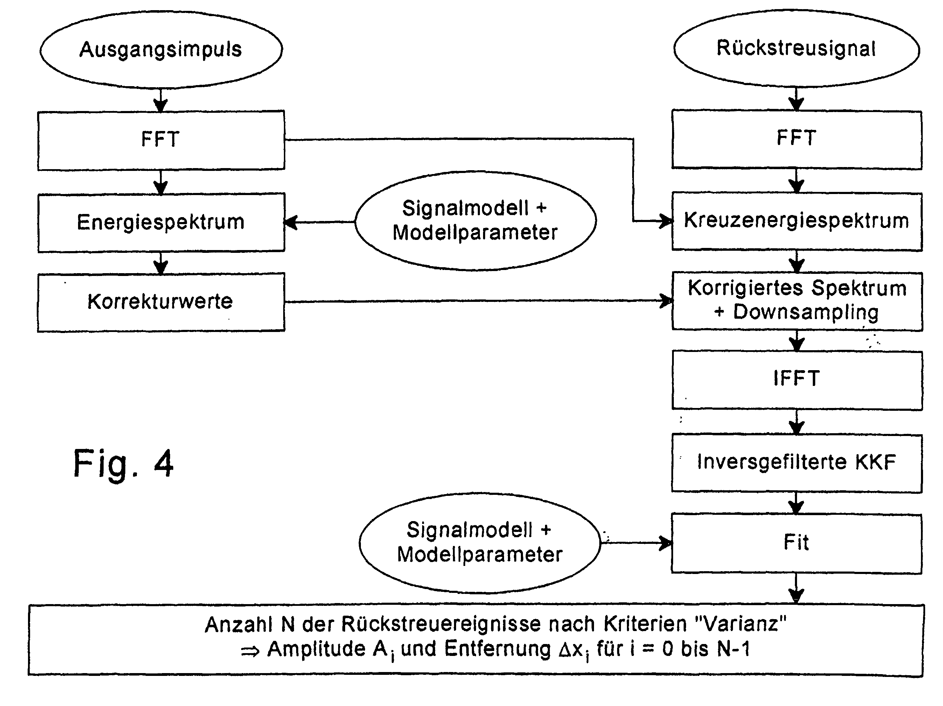

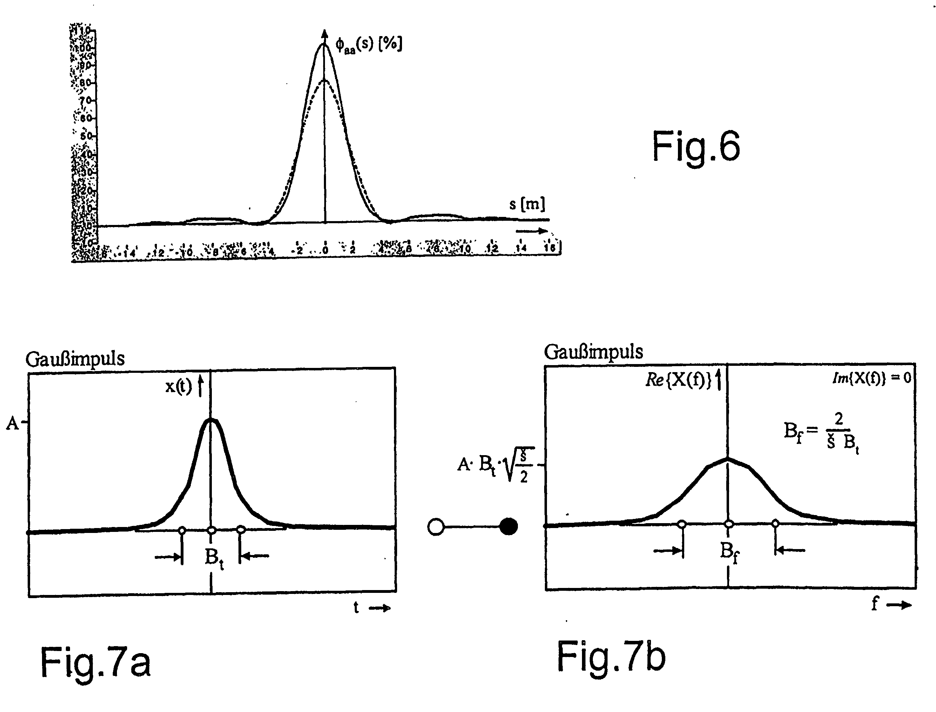

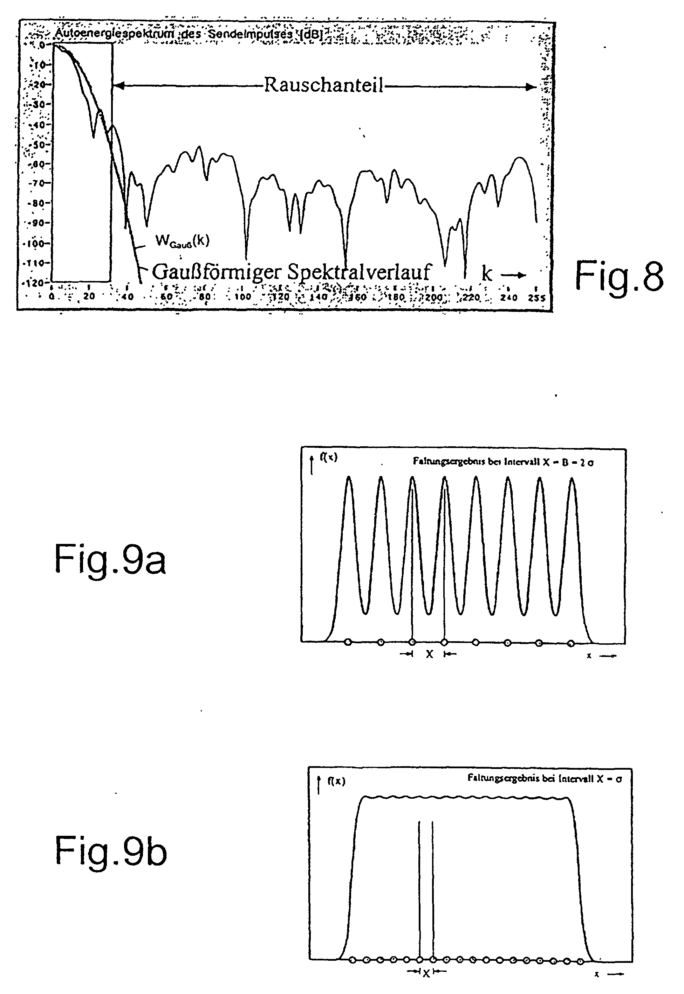

Fig.4 zeigt den Ablaufplan für die Prozedur zur inversen Filterung beim Verfahren nach der Erfindung. Aus dem digitalisierten Ausgangsimpuls wird zunächst das Autoenergiespektrum mit Hilfe der FFT (Fast Fourier Transformation) berechnet. In den relevanten Spektralbereich wird eine Gauß-Funktion gelegt, deren Breite so angepaßt wird, daß eine gute Annäherung an die vorliegenden Daten erreicht wird (Fig.8). Für jeden diskreten Spektralwert wird nun ein Korrekturfaktor berechnet, der die Abweichung der Meßdaten vom Verlauf der mathematischen Funktion dokumentiert. Das gaußförmige Energiespektrum bildet ein Fourier-Paar mit einer ebenfalls gaußförmigen Autokorrelationsfunktion (AKF), deren Breite nun eindeutig definiert ist (Fig.7).

Aus den Fourier-Spektren des Remissionssignals und des Ausgangsimpulses wird in einem weiteren Schritt das Kreuzenergiespektrum berechnet, das ein Fourier-Paar mit der Kreuzkorrelationsfunktion bildet. Der Betrag des Kreuzenergiespektrums wird unter Zuhilfenahme der zuvor berechneten Korrekturfaktoren in der Weise korrigiert, daß die Kreuzkorrelationsfunktion (KKF) als Summe von definierten, zeitlich versetzten Gauß-Impulsen betrachtet werden kann. Der obere Spektralbereich des Kreuzenergiespektrums wird entfernt, da dieser nur Rauschanteile enthält.

Neben einer Rauschminderung wird dadurch auch eine Reduzierung der Meßdaten erreicht, was den Rechenaufwand für die folgende mathematische Anpassung reduziert. An die invers gefilterte Kreuzkorrelationsfunktion (KKF) wird jeweils eine unterschiedliche Anzahl von Gauß-Impulsen mit der vorgegebenen Breite angepaßt. Als Kriterium für die Anzahl N der Streuzentren gilt die Varianz, die sich bei Hinzunahme eines nicht existierenden Streuereignisses kaum mehr ändert (Fig.17). Somit werden neben der Anzahl N der Streuereignisse deren Stärke (Amplitude) $A_i$ und deren Position (Entfernung) $\Delta x_i$ erhalten.

Im folgenden wird die Ermittlung der Laufzeit von Lidar-Impulsen erörtert. Ein ebenes Hart-Target remittiert einen idealen, diracförmigen Lidar-Sendeimpuls $x_a(t)$ als ebenfalls diracförmiges Rückstreusignal $x_r(t)$. Die zeitliche Verschiebung des Rückstreuimpulses gegenüber dem Sendeimpuls ließe sich in diesem Fall mit unendlich hoher Auflösung realisieren. Die Autokorrelationsfunktion (AKF) $\Phi_{aa}(t)$ des idealen Sendeimpulses besitzt ebenfalls die Form eines Dirac-Impulses, dessen Fläche der Pulsenergie Wa entspricht. Entsprechend dem Korrelationstheorem bildet die Autokorrelationsfunktion $\Phi_{aa}(t)$ des Ausgangssignals $x_a(t)$ ein Fourierpaar mit dessen Energiespektrum $W_{aa}(f)$:

$$\Phi_{aa}(t) \quad \circ\!\!-\!\!\bullet \quad W_{aa}(f) = |X_a(f)|2 \qquad\qquad (4)$$

Im Idealfall besitzt das Energiespektrum einen konstanten Verlauf im gesamten Frequenzverlauf. Die Kreuzkorrelationsfunktion (KKF) zwischen Ausgangs- und Rückstreuimpuls von einem Hart-Target entspricht im Idealfall ebenfalls einem Dirac-Impuls, aus dessen Fläche der Reflexionsgrad des Targets ermittelt werden kann. Die Kreuzkorrelationsfunktion bildet ein Fourier-Paar mit dem komplexwertigen Kreuzenergiespektrum $W_{ar}(f)$ des Sendeimpulses $x_a(t)$ und des Rückstreusignals $x_r(t)$:

$$\Phi_{ar}(t) \quad \circ\!\!-\!\!\bullet \quad \underline{W}_{ar}(f) = \underline{X}_a(f) \cdot \underline{X^*}_r(f) \qquad\qquad (5)$$

Die gesamte Information über die zeitliche Verschiebung eines Rückstreusignals gegenüber dem Sendeimpuls ist gemäß dem Verschiebungstheorem im Phasenverlauf $\varphi_{ar}(f)$ des Kreuzenergiespektrums $\underline{W}_{ar}(f)$ enthalten, während das Betragspektrum $|W_{ar}(f)|$ die Information über den Amplitudenverlauf der Kreuzkorrelationsfunktion birgt.

Bei einem einzelnen Hart-Target nimmt im Idealfall der Betrag des Kreuzenergiespektrums im gesamten Spektralbereich einen konstanten Verlauf an, während das Phasenspektrum einer Ursprungsgeraden entspricht. Ein diracförmiges Lidar-Signal ließe sich in der Realität nicht digitalisieren, da das Abtast-Theorem eine endliche Bandbreite des Analogsignals erfordert.

Ein Gauß-Impuls mit endlicher Breite besitzt einen Tiefpaßcharakter und ermöglicht daher die Einhaltung des Abtast-Theorems bei endlicher Abtastrate. Sowohl die Autokorrelationsfunktion eines gaußförmigen Lidar-Impulses als auch der Betrag der Kreuzkorrelationsfunktion eines Sendeimpulses mit einem zeitlich verschobenen Impuls besitzt einen gaußförmigen Verlauf. Das Phasenspektrum ist in diesem Fall nur bis zu einer Maximalfrequenz definiert, oberhalb derer der Rauschanteil des Analogsignals dominiert. Die Laufzeit eines gaußförmigen Lidar-Impulses bis zu einem Hart-Target kann im Zeitbereich im einfachsten Fall durch Ermittlung des Maximalwerts der Kreuzkorrelationsfunktion oder über die Anstiegsflanke des Gauß-Impulses berechnet werden.

In beiden Fällen kann man zwar durch Interpolation eine Auflösung unterhalb der Abtastintervalle erreichen, jedoch wird nur ein Bruchteil der verfügbaren Information in die Analyse einbezogen. Die Unsicherheit der Meßergebnisse wird zusätzlich durch den Rauschanteil der Analogsignale erhöht. Erfolgt die Remission eines gaußförmigen Lidar-Impulses über mehrere, dicht hintereinander liegende Hart-Targets, so addieren sich die einzelnen Gauß-Impulse in der Kreuzkorrelationsfunktion zu einem breiten Impuls auf, aus dem sich die Position der einzelnen Targets nicht ohne weiteres ermitteln läßt.

Die gesamte Information über die Position des Hart-Targets liegt im Phasenspektrum des Kreuzenergiespektrums. Im Spektralbereich läßt sich somit die Position eines einzigen Hart-Targets durch Anpassung einer Ursprungsgeraden an die im Phasenspektrum auftretende Ursprungsgerade mit der Steigung m ermitteln. Die Position $\Delta t$ des Hart-Targets ergibt sich über die Geradensteigung m: $\Delta t = m/2\pi$. Bei der Berechnung des Phasenspektrums aus dem komplexwertigen Kreuzenergiespektrum ist darauf zu achten, daß die Phasenwerte zunächst nur auf den Bereich $-\pi \leq \varphi \leq +\pi$ beschränkt sind, da die tan-Funktion mehrdeutig ist. Aus diesem Grund muß vor der Auswertung eine stetige Phasenfunktion berechnet werden ("Phase Unwrapping").

Das auswertbare Phasenspektrum beschränkt sich zusätzlich auf jenen Spektralbereich, in dem ein akzeptables Signal-RauschVerhältnis vorliegt. Die Anpassung einer Ursprungsgeraden an das aufbereitete, diskrete Phasenspektrum liefert nun einen Verschiebungswert $\Delta t$, der auf einer großen Anzahl von Meßdaten beruht. Die Unsicherheit des Verschiebungswertes liegt daher deutlich unterhalb des Abtastintervalls der Digitalisierung. Liegen mehrere Hart-Targets vor, so besitzt das Phasenspektrum einen relativ komplizierten Verlauf und ist daher einer einfachen Auswertung nicht mehr zugänglich. In diesem Fall erscheint die Auswertung im Zeitbereich vorteilhafter.

Wird die Vorkenntnis über den Verlauf der Autokorrelationsfunktion eines Lidar-Sendeimpulses genutzt, so kann die Position eines Targets mit Hilfe mathematischer Anpassung des AKF-Impulses an den in der KKF auftretenden Impuls ermittelt werden. Dieses Verfahren nach der Erfindung hat den Vorteil, daß auch überlappende Impulse separiert werden können. Die Form eines realen Lidar-Sendeimpulses ist weder reproduzierbar, noch folgt sie in der Regel einer einfachen mathematischen Gesetzmäßigkeit.

Durch Anwendung der inversen Filterung entsprechend dem Verfahren nach der Erfindung kann jedoch erreicht werden, daß die KKF von Sendeimpuls und Rückstreuimpuls eines Hart-Targets bei jeder Einzelmessung die Form eines normierten Gauß-Impulses annimmt. Die Position $\Delta t$ und die Maximalamplitude $\Phi_{max}$ der Kreuzkorrelationsfunktion $\Phi_{ar}(t)$ läßt sich dann durch mathematische Anpassung eines Gauß-Impulses mit definierter Breite ermitteln. Die gesamte Vorinformation über die Form des Sendeimpulses fließt bei diesem Verfahren in die Auswertung ein. Zusätzlich wird eine deutliche Verringerung des Rauschanteils erreicht.

Nachfolgend wird die inverse Filterung der Kreuzkorrelationsfunktion (KKF) erläutert.

Die Auswertung der KKF durch Anpassung einer mathematischen Funktion an die diskreten Daten ist erst dann möglich, wenn folgende Bedingungen erfüllt sind:

- Die KKF besitzt unter gegebenen Rückstreubedingungen bei Wiederholungsmessungen immer die identische Form.

- Die KKF läßt sich mit einer mathematischen Funktion beschreiben, die möglichst wenige Funktionsparameter erfordert.

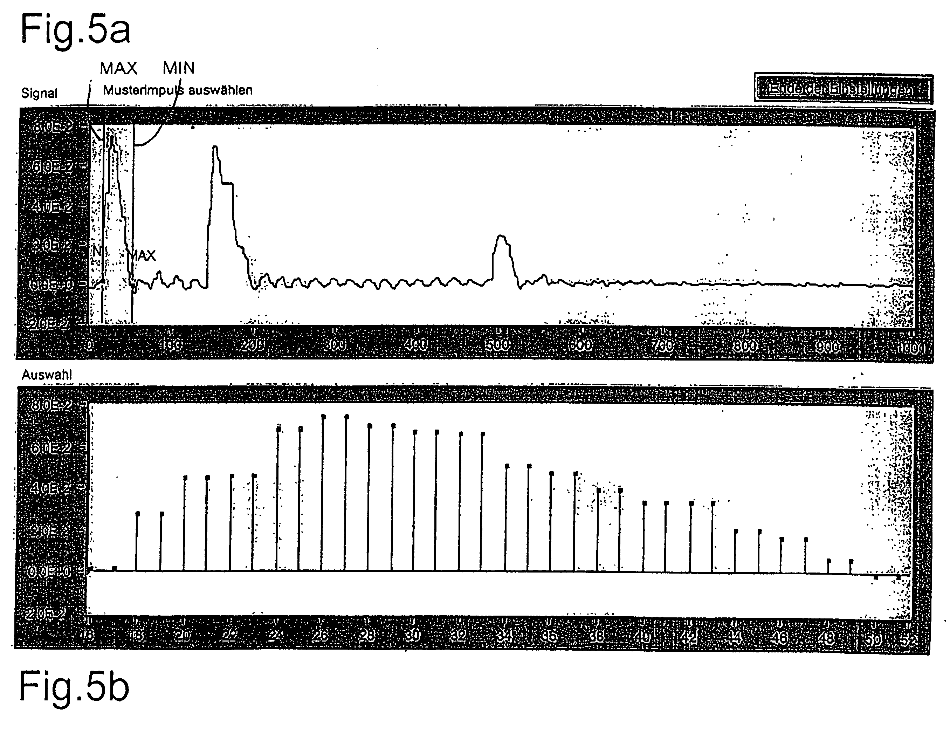

Fig.5b zeigt unterhalb des in Fig.5a dargestellten Lidar-Signalverlaufs, an dessen Beginn zwischen MIN und MAX der Sendeimpuls liegt, den typischen Verlauf eines abgetasteten und digitalisierten Lidar-Sendeimpulses. Die Pulsform besitzt einen unsymmetrischen Charakter und ist zudem bei Wiederholungsmessungen nicht exakt reproduzierbar. Zudem sind nach der abfallenden Flanke noch Oszillationen zu beobachten.

Die AKF des in Fig.5b gezeigten Lidar-Impulses ist in Fig.6 als durchgehende Linie in einer symmetrischen Form dargestellt. Der Nullpunkt der zyklischen Funktion liegt daher in der Mitte der Fig.6. Die AKF entspricht generell einer geraden Funktion, deren Maximalwert im Zeitnullpunkt der Impulsenergie entspricht. Die Parametrisierung der AKF wäre in der vorliegenden Form nur mit relativ hohem mathematischen Aufwand verbunden, da diese keiner einfachen Gesetzmäßigkeit folgt. Zudem besitzt die AKF jedes Einzelimpulses eine individuelle Form, was eine Parametrisierung zusätzlich erschwert.

Die inverse Filterung bietet nun die Möglichkeit, die AKF jedes individuellen Lidar-Sendeimpulses in die Form eines Gauß-Impulses umzuwandeln, der die beiden Parameter A und B enthält:

$$x(t) = A \cdot \exp\left(-2 \cdot \left(\frac{t}{B}\right)^2\right). \qquad (6a)$$

Der Parameter A entspricht der Signalenergie des Sendeimpulses. Die Pulsbreite $B = 2\sigma$ ist über die Standardabweichung $\sigma$ definiert, die in der Statistik die Breite einer gaußförmigen Normalverteilung festlegt. Ein Gauß-Impuls im Zeitbereich besitzt ein ebenfalls gaußförmiges Fourierspektrum:

$$x(t) = A \cdot \exp\left(-2 \cdot \left(\frac{t}{B}\right)^2\right) \qquad X(f) = \sqrt{\frac{\pi}{2}} \cdot A \cdot B \cdot \exp\left(-2 \cdot \left(\frac{\pi \cdot B \cdot f}{2}\right)^2\right) \quad (6b)$$

Entsprechend der Unschärferelation besitzt ein im Zeitbereich breiter Gauß-Impuls eine schmale Spektralfunktion (Fig.7a und Fig.7b). Die impulsförmige AKF eines Lidar-Sendeimpulses besitzt im Zeitbereich eine endliche Breite und somit auch nur ein spektral begrenztes Energiespektrum, in dessen oberen Frequenzbereich nur noch Rauschanteile zu erwarten sind.

Fig.8 zeigt als Beispiel das diskrete Energiespektrum $W_{aa}(k) = |X_a(k)|2$ eines Lidar-Sendeimpulses, das aus N = 512 Abtastwerten xa(n) berechnet wurde. Die Nyquistfrequenz liegt somit beim spektralen Indexwert k = 256. Das Energiespektrum ist in logarithmischer dB-Skalierung dargestellt, wobei der Referenzwert durch den Nullpunkt des Spektrums gegeben ist. Die relevanten Spektralwerte des Sendeimpulses beschränken sich auf jenen unteren Spektralbereich, der in Fig.8 durch ein Rechteck gekennzeichnet ist.

In diesem Spektralbereich ist ein mathematisch definierter, diskreter Gauß-Impuls $W_{Gauß}(k)$ eingezeichnet, der in grober Näherung dem Verlauf des diskreten Energiespektrums $W_{aa}(k)$ folgt. Die Wahl der Breite der Gauß-Funktion ist relativ unkritisch, da sich diese kaum auf das Analyseergebnis auswirkt. Die Obergrenze des nutzbaren Spektralbereichs ist dann erreicht, wenn die Amplitude des mathematisch definierten Gauß-Impulses unter das Niveau des Rauschanteils fällt, der im oberen Spektralbereich dominiert.

Um die Störanteile im oberen Spektralbereich zu eliminieren, reduziert man in diesem Fall das zweiseitige Energiespektrum um den Faktor 8. Dazu werden die ersten 33 Werte ($0 \leq k \leq 32$) des Energiespektrums, und die letzten 31 Werte ($480 \leq k \leq 512$) des Energiespektrums zu einem verkürzten Energiespektrum zusammengesetzt. Nach der Rücktransformation in den Zeitbereich erhält man eine gaußförmige AKF mit N = 64 Werten mit deutlicher Reduktion des Rauschanteils (Fig.6, gepunktete Linie). Diese Vorgehensweise entspricht einer Unterabtastung mit Hilfe eines idealen Tiefpaßfilters. Die reellwertige "Korrekturfunktion"

$$Z(k) = \frac{W_{Gauß}(k)}{W_{aa}(k)} \qquad (7)$$

bildet nun die Grundlage für die inverse Filterung der ebenfalls auf N = 64 Werte reduzierten Kreuzkorrelationsfunktion $\Phi_{ar}(k)$.

Der Betrag des reduzierten Kreuzenergiespektrums $|W_{ar}(k)|$ wird nun mit der "Korrekturfunktion" Z(f) multipliziert. Aus dem "korrigierten" Betragsspektrum und dem unveränderten, ebenfalls reduzierten Phasenspektrum $\varphi_{ar}(k)$ läßt sich das modifizierte komplexwertige Kreuzenergiespektrum berechnen:

$$W_{ar,inv}(f) = Z(k) \cdot |War(k)| \cdot \exp(i\ \varphi_{ar}(k)). \qquad (8)$$

Nach der Rücktransformation in den Zeitbereich erhält man eine "invers gefilterte" KKF, die jeweils an der Position eines Rückstreuereignisses einen Gauß-Impuls mit definierter Breite aufweist. Durch die Festlegung der Parameter des Gauß-Impulses im Spektralbereich sind auch gemäß der Gleichung (7) die Werte der Impulsparameter der AKF verfügbar. Neben einer Reduktion des Rauschanteils der KKF wurde durch die inverse Filterung eine Reduktion der Daten erzielt, ohne dabei Information zu verlieren.

Im folgenden wird die Anwendungsweise des Verfahrens nach der Erfindung zur Messung diffuser Streuer beschrieben.

Das Lidar-Verfahren wird nicht nur zur Lokalisierung von Hart-Targets verwendet, sondern dient auch der Messung der Dichte von Aerosolwolken. Die genaue räumliche Position von Rückstreuzentren spielt in diesem Fall eine untergeordnete Rolle, weil der Raum entlang der Strahlrichtung in diskrete Volumenelemente (Voxel) aufgeteilt wird. Die Größe der Volumenelemente hängt von der Breite der AKF des Sendeimpulses ab. Die Bildung einer diskreten Folge von Rückstreuereignissen entspricht einer Quantisierung des Raumes in Strahlrichtung.

Die KKF zwischen Sendeimpuls und Rückstreusignal kann in diesem Fall als Faltung der invers gefilterten und somit gaußförmigen AKF mit einer gewichteten Diracimpuls-Folge betrachtet werden. Aus den einzelnen Wichtungsfaktoren kann die Aerosoldichte der entsprechenden Volumenelemente berechnet werden. Die gaußförmige AKF des invers gefilterten Sendeimpulses kann als Impulsantwort eines Rekonstruktionsfilters betrachtet werden, das aus einer diskreten Wertefolge ein "Analogsignal" erzeugt.

Ziel der mathematischen Anpassung ist es, die einzelnen Wichtungsfaktoren der Diracimpuls-Folge zu ermitteln. Die willkürliche Festlegung der Abstandsintervalle X zwischen den Dirac-Impulsen wirkt sich nicht auf das Analyseergebnis aus, wenn diese auf die Pulsbreite der AKF angepaßt wird.

Durch Faltung eines einzelnen Gauß-Impulses mit einer Deltaimpuls-Folge mit konstanter Wichtung läßt sich ein näherungsweise konstantes Signal erzeugen, dessen Restwelligkeit von der Periodendauer abhängt. Der Abstand zwischen zwei aufeinanderfolgenden Gauß-Impulsen wird so gewählt, daß die Restwelligkeit in der Größenordnung des Rauschanteils der KKF liegt (Fig.8).

Durch die inverse Filterung ist sichergestellt, daß sich die KKF aus einer Folge von Gauß-Impulsen mit definierter Breite zusammensetzt. Mit Hilfe eines mathematischen Anpassungsprogramms (z.B. Marquart Linear Least Square Fit) lassen sich nun die Wichtungsparameter der Diracimpuls-Folge ermitteln, aus der durch eine Faltungsoperation die KKF erzeugt wurde.

Mit Hilfe des Rückstreumodells läßt sich nun die jeweilige Aerosoldichte eines Volumenelements entlang der Ausbreitungsrichtung des Laserstrahls ermitteln.

Die Fig.9a und 9b zeigen, daß sich durch Faltung eines Gauß-Impulses mit einer Diracimpuls-Folge näherungsweise ein Rechteckimpuls erzeugen läßt, dessen Restwelligkeit vom Abstandsintervall X der Diracimpuls-Folge abhängt. Die Graphik in Fig.9a zeigt das Faltungsergebnis beim Intervall X = Impulsbreite B = 2·Standardabweichung $\sigma$, während in der in Fig.9b abgebildeten Graphik das Ergebnis bei X = $\sigma$ dargestellt ist.

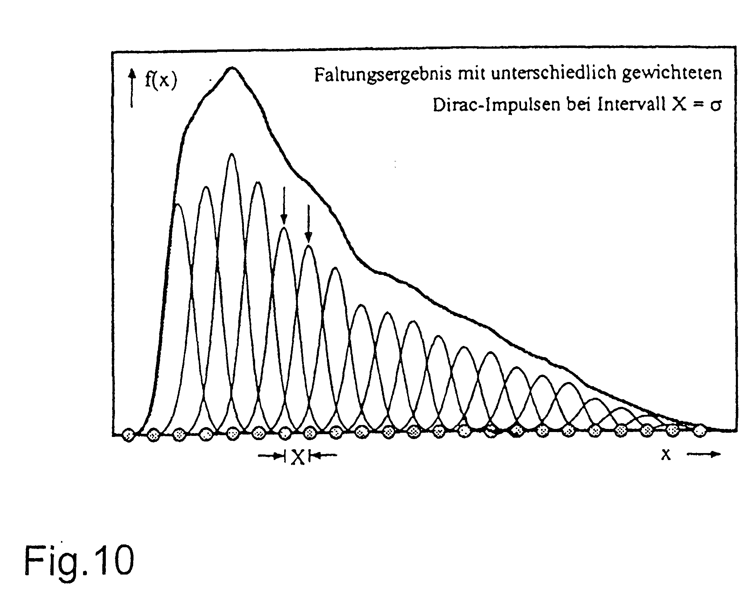

Die Auswertung der Rückstreusignale liefert zunächst nur die Wichtungskoeffizienten jener Diracimpuls-Folge, die aus dem Sendeimpuls durch eine Faltungsoperation das Rückstreusignal erzeugt. Die Dichte D(x) der Aerosolwolke entlang der Ausbreitungsrichtung x des Laserimpulses ergibt sich erst aus der Anwendung des diskreten Rückstreumodells, das die Kenntnis der Transmissions- und der Rückstreukoeffizienten der Raumpunkte als Funktion der Aerosoldichte und -struktur erfordert. In diesem Zusammenhang wird auf die Fig.10 hingewiesen, aus der sich erkennen läßt, daß durch Faltung eines Gauß-Impulses mit einer gewichteten Diracimpuls-Folge ein beliebiger Signalverlauf synthetisiert werden kann, wenn dieser einen entsprechenden Tiefpaßcharakter aufweist. Das Abstandsintervall X der Diracimpuls-Folge ist in diesem Fall mit der Standardabweichung $\sigma$ des Gauß-Impulses identisch.

Im folgenden wird ein Rückstreumodell von Nebel beschrieben.

Eine Aerosolwolke besteht aus Mikropartikeln, die einen einfallenden Laserstrahl in alle Raumrichtungen streut. Ein Streuzentrum kann als punktförmige Lichtquelle betrachtet werden, die abhängig von der Art des Streumechanismus mit winkelabhängiger Intensität in den umgebenden Raum abstrahlt. Dabei wird ein Teil des einfallenden Lichts wieder in Richtung der Lichtquelle zurückgestreut.

Ein würfelförmiges Volumenelement mit konstanter Partikeldichte enthält eine große Anzahl von Streuzentren, so daß das aus dem Volumenelement austretende Licht mehrere Streuprozesse durchlaufen hat. Die Dichte der Streuzentren in einer realen Aerosolwolke ist eine kontinuierliche Funktion D(x,y,z) der Raumkoordinaten x, y, und z. Die theoretische Beschreibung der Rückstreuprozesse in einer nichthomogenen, kontinuierlichen Aerosolwolke würde einen hohen mathematischen Aufwand erfordern, der eine schnelle Auswertung der Rückstreusignale in Frage stellt.

Der Raum, in dem sich ein zu untersuchendes Aerosol befindet, wird in diskrete Würfel aufgeteilt, in denen die Dichte der Aerosolpartikel als konstant betrachtet wird. Jedes Volumenelement wird nun auf einen Punkt reduziert, der nun die Streueigenschaften des Volumenelements repräsentiert. Dieses Raumgitter-Modell erlaubt eine diskrete Berechnung der Remission eines einfallenden Laserstrahls.

Beim Durchqueren eines Volumenelements reduziert sich die Intensität des eintreffenden Laserstrahls $I_e(n)$ auf den Wert $I_a(n)$ gemäß dem Transmissionskoeffizienten $T(n) = I_e(n)/I_a(n)$ des entsprechenden Raumpunkts. Der Rückstreukoeffizient $\beta(n) = I_e(n)/I_r(n)$ definiert das Verhältnis der Intensität $I_r(n)$ des rückgestreuten Lichts in bezug auf jene des einfallenden Lichts. Ein Teil des einfallenden Lichts wird in die übrigen Raumrichtungen gestreut und geht für die Messung verloren.

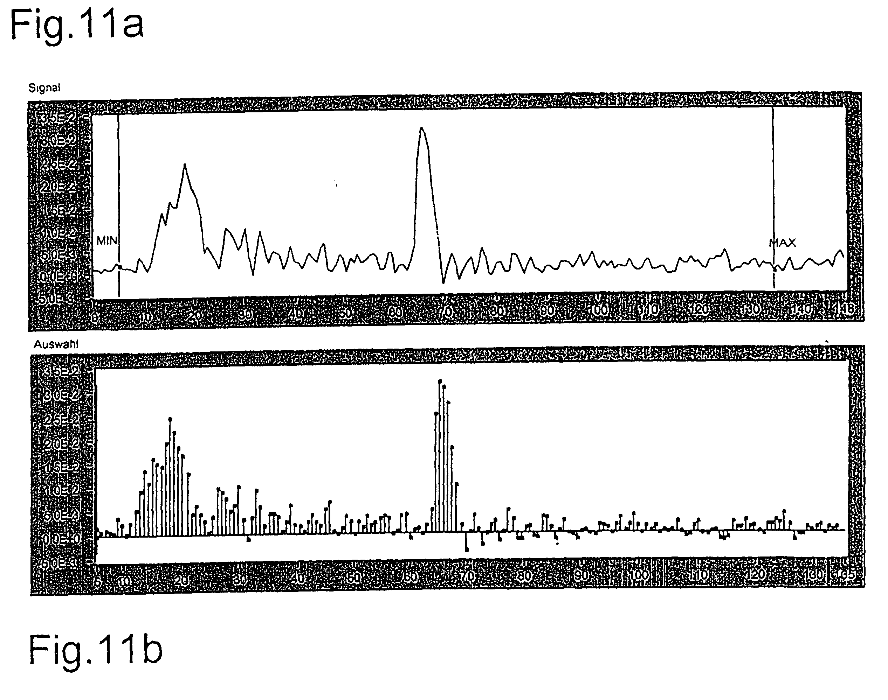

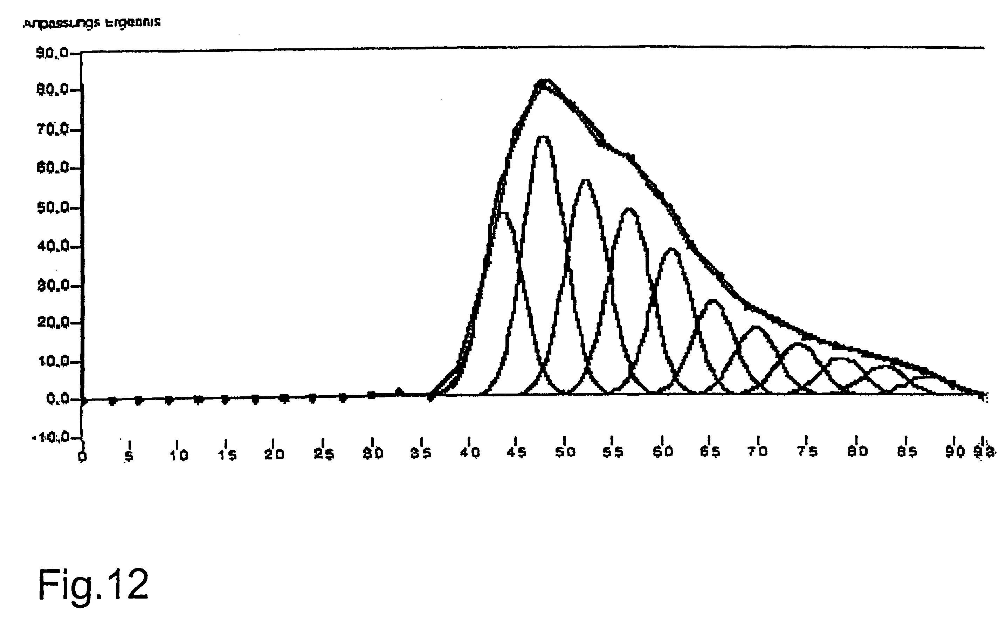

Nachfolgend wird anhand der Fig.11a, 11b und 12 die Auswirkung einer inversen Filterung des Nebelsignals erläutert.

Die Fig.11a zeigt ein Signal einer mit einem LEM (Laser-Entfernungsmesser) vorgenommenen Lidar-Schnee-Messung und Fig.11b einen Ausschnitt davon zwischen MIN und MAX in digitalisierter Form. Das Signal enthält auch ein Festziel in 65 m Entfernung und das Schnee-Signal zwischen 10 m und 50 m. Der Überlappungsbereich (Fig.1) liegt zwischen 10 und 15 Metern. Wird die inverse Filterung auf dieses Signal angewandt, so gelangt man zum gemittelten Signal der Fig.12.

Nachfolgend sind einige Anwendungsmöglichkeiten des Verfahrens nach der Erfindung beschrieben.

Die erste hier beschriebene Anwendungsmöglichkeit betrifft die sogenannte Sichtweite nach Klett. Die lokale Sichtweite kann durch Invertierung der Lidar-Gleichung mittels dem sogenannten Klett-Algorithmus (Klett, J.D.: "Stable Analytic Inversion Solution for Processing Lidar Returns", Applied Optics 20, 211, 1981) aus folgender Gleichung ermittelt werden:

$$\sigma(R) = \frac{S(R)}{\dfrac{S(R_m)}{\sigma(R_m)} + 2\int_R^{R_m} S(r)\,dr},$$

wobei

$\sigma(R)$: lokale Extinktion, die invers proportional zur lokalen Sicht ist
$S(R)$: Lidar-Signatur, die aus der Gleichung (1) gegeben ist durch:

$$S(R) = \frac{U(R)R^2}{k\xi(R)} = \beta(R)\,\tau(R)^2 .$$

Die Hauptschwierigkeiten beim Klett-Algorithmus bestehen in der:

1.) Ermittlung eines Startwertes $\sigma(R_m)$, und in der
2.) Bestimmung der maximalen Meßentfernung $R_m$.

Die größte Fehlerquelle ist in der Praxis der vorgenannte Punkt 2: der Meßbereich sollte möglichst groß gewählt werden, darf aber auf keinen Fall im Rauschanteil des Signals liegen, da sonst ausgelöst durch $S(R_m)$ jede Berechnung falsche Extinktionswerte liefern würde.
Das Verfahren nach der Erfindung liefert einen $R_m$-Wert insofern, daß die Synthetisierung mittels gefalteter Gauß-Impulse (vergl. Fig. 10) einen eindeutigen letzten Raumpunkt ergibt. Des weiteren enthält das synthetisierte Signal nur noch reine Rückstreuintensitäten ohne jeden Rauschanteil. Der Startwert $\sigma(R_m)$ kann aus diesem Signal dann im weiteren mittels Iteration (vgl. dazu die deutsche Patentschrift DE 196 42 967) stabil ermittelt werden.
Die zweite hier beschriebene Anwendungsmöglichkeit betrifft die Messung von Gaskonzentrationen.
Für das sogenannte DAS-Lidar wird mit zwei Lidarsignalen gearbeitet, und der Quotient ist ein Maß für die Konzentration. Dabei kann die Entfernungsauflösung bei Punktquellen hoher Konzentration ein Problem darstellen. Für das DAS-Lidar (VDI 4210 Blatt 1) gilt die Lidar-Gleichung

$$P(x, \lambda) = \frac{c\Delta x}{x^2}\, E\beta(x, \lambda)\exp\left\{-2\int_0^x \left(n_g(\zeta)\sigma_g(\lambda) + \alpha_{Mol}(\zeta, \lambda) + \alpha_{Aer}(\zeta, \lambda)\right)d\zeta\right\}$$

mit $n_g$ als der Zahl der Moleküle des betrachteten Gases g und $\sigma_g(\lambda)$ als der Streuquerschnitt des Gases.
Zwei Messungen auf den Wellenlängen $\lambda_{on}$ und $\lambda_{off}$ werden nahezu gleichzeitig ausgeführt. In einem Intervall $\Delta x$ wird die Gleichung für zwei Messungen zusammengestellt:

$$n_g(\Delta x) = -\frac{1}{2\Delta\sigma_g}\frac{d}{d_x}\ln\frac{P_{off}(x)}{P_{on}(x)}$$

$$+ \frac{1}{2\Delta\sigma_g}\frac{d}{d_x}\ln\frac{\beta_{off}(x)}{\beta_{on}(x)}$$

$$- \frac{1}{\Delta\sigma_g}\Delta\alpha_{Aer}(x)$$

$$- \frac{1}{\Delta\sigma_g}\Delta\alpha_{Mol}(x) .$$

Viele Voraussetzungen sind notwendig, um die Gaskonzentration exakt zu bestimmen:

- die Molekülabsorption auf den beiden Wellenlängen im Meßintervall muß bekannt sein (oder gleich),
- die Aerosolabsorption auf den beiden Wellenlängen im Meßintervall muß bekannt sein (oder gleich),
- die Rückstreuung auf den beiden Wellenlängen muß bekannt oder gleich sein, und
- die Signalstärke auf den beiden Wellenlängen muß angepaßt sein.

Hier kommt der erfindungsgemäßen Bestimmung der Voxels (Volumenelemente) starke Bedeutung zu. Man hat damit ein optimales Verfahren, den Einfluß der Umgebung an die Impulslänge anzupassen.

Die dritte hier beschriebene Anwendungsmöglichkeit betrifft die Messung von Doppler-Wind-Signalen.

Die Anwendung des erfindungsgemäßen Verfahrens auf die Doppler-Lidarsignale bezieht sich auf die zusätzliche Information hinsichtlich der Frequenz. In dem Voxel ist eine Frequenzänderung gegenüber dem ausgesandten Impuls zu messen. Diese kann mit Methoden der Bildverarbeitung dargestellt werden.

Die vierte hier beschriebene Anwendungsmöglichkeit betrifft die Messung von Glasfaseroptik-Netzwerk-Störstellen.

Im Bereich der Fehlstellenanalyse eines glasfaseroptischen Netzwerks kann der Algorithmus analog zum freien Lidar in der Atmosphäre angewandt werden. Der Ort der Fehlstelle läßt sich auf Zentimeter genau bestimmen.

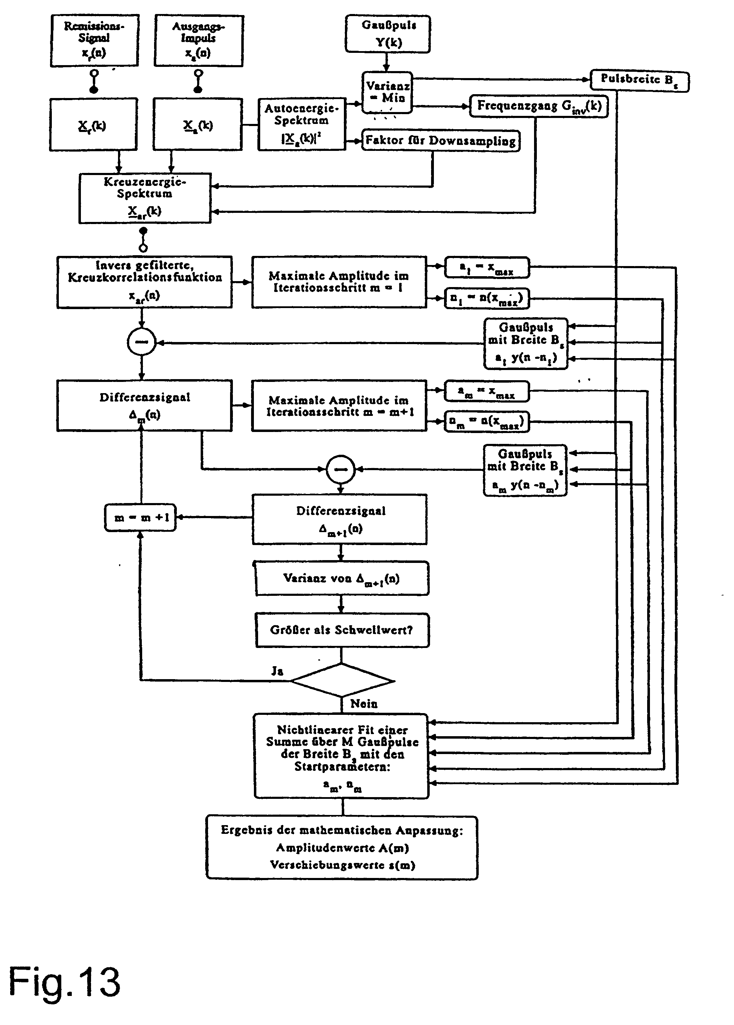

In der Fig.13 ist in einem detaillierten Flußdiagramm über den groben Ablaufplan der Fig.4 hinausgehend der genaue Ablauf der inversen Filterung bzw. des Verfahrens nach der Erfindung dargestellt. Die Funktion ergibt sich aus den in Fig.13 vorgesehenen Angaben.

Im folgenden ist noch ein Test des Verfahrens nach der Erfindung mit Hart-Targets beschrieben.

Ein Diodenlaser-Entfernungsmesser (LEM 300) wurde zur genauen Entfernungsbestimmung benutzt. Die Parameter des Meßsystems sind in der nachfolgenden Tabelle 1 aufgelistet.

| Laser | Laserdiode |
|---|---|
| Pulswiederholfrequenz | 600 Hz |
| Wellenlänge | 904 nm |
| Impulsenergie | 0,3 mJ |
| Sendeoptik-Durchmesser | 50 mm |
| Strahldivergenz | 1,5 mrad |
| Empfängeroptik-Durchmesser | 50 mm |
| Divergenz | 6 mrad |
| Abstand zwischen Sender und Empfänger | 60 mm |
| Winkel zwischen Sender und Empfänger | 0° |
| Digitalisierung | 200 MHz |

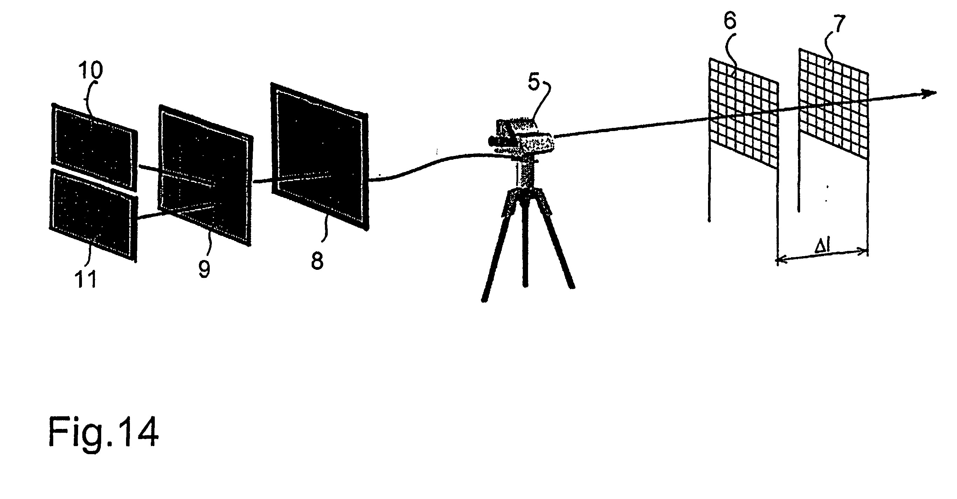

Für die Durchführung des Tests wurde die in der Fig.14 dargestellte Anordnung verwendet. Es sind vor dem Laser-Entfernungsmesser 5 in einem Abstand von 18,8 m mit einem Versatz $\Delta l$ zueinander zwei Netze 6 und 7 angeordnet. Zur Meßauswertung der vom Detektor empfangsseitig aufgenommenen optischen Signale, die in entsprechende elektrische Signal umgewandelt werden, sind der Reihe nach ein schneller Digitalisierer 8, ein Personal Computer 9 und ein Sichtgerät 10 sowie ein Drukker 11 vorgesehen.

Ein diesbezügliches Signal ist in den Fig.5a und 5b dargestellt. Der ausgesendete Impuls wird am Anfang detektiert und über eine Glasfaser an die Empfängeroptik gebracht. Das Signal von den Netzen folgt im Empfangssignal danach und ein Hart-Target-Signal von einer Wand in einer Entfernung von 71 m schließt das gesamte Empfangssignal ab.

Im folgenden wird die Rückstreuung eines einzelnen Hart-Targets erläutert.

Im mathematischen Modell entspricht die Rückstreuung eines Hart-Targets der Faltung des Sendeimpulses mit einem Dirac-Impuls, der sich auf der Zeitachse bei dem Wert der Laufzeit $\Delta t$ des Sendeimpulses befindet.

Die KKF eines realen Sendeimpulses mit dem entsprechenden Remissionssignal weist am Zeitpunkt $\Delta t$ einen symmetrischen Impuls auf, dessen Symmetrieachse beim Zeitpunkt $\Delta t$ liegt. Die Form des Impulses ist identisch mit jener der AKF des Sendesignals.

Mit $x = c \cdot t/2$ (c = Lichtgeschwindigkeit) läßt sich aus der zeitabhängigen Kreuzkorrelationsfunktion $\phi ar(t)$ die ortsabhängige Funktion $\phi_{ar}(x)$ berechnen, aus der sich die Position x eines Streuobjekts in Bezug auf den Meßort erkennen läßt. Die Position $x_0$ und die Maximalamplitude $\phi_{ar}(x_0)$ der Kreuzkorrelationsfunktion lassen sich durch mathematische Anpassung eines Gauß-Impulses mit der durch die inverse Filterung vorgegebenen Breite ermitteln. Das Verfahren der nichtlinearen Anpassung (Marquart Nonlinear Least Square Fit) stellt gewisse Minimalanforderungen über die Startwerte der Fitparameter. Diese erhält man dadurch, indem man den maximalen Amplitudenwert innerhalb der dezimierten, diskreten KKF ermittelt und diesen gemeinsam mit der entsprechenden Position als Startwert verwendet.

Die Anpassungsroutine findet die optimalen Fitparameter Amplitude und Position nach weniger als fünf Iterationen. Die Meßunsicherheit, die unter den gegebenen Voraussetzungen erzielt wird, liegt unterhalb $\pm$ 10 cm. Bei Änderung der Signalausschnitte des Sendeimpulses und des Remissionssignals und der für die inverse Filterung gewählten Pulsbreite des Energiespektrums $W_{aa}(k)$ erreicht man eine Wiederholgenauigkeit von etwa $\pm$ 2 cm.

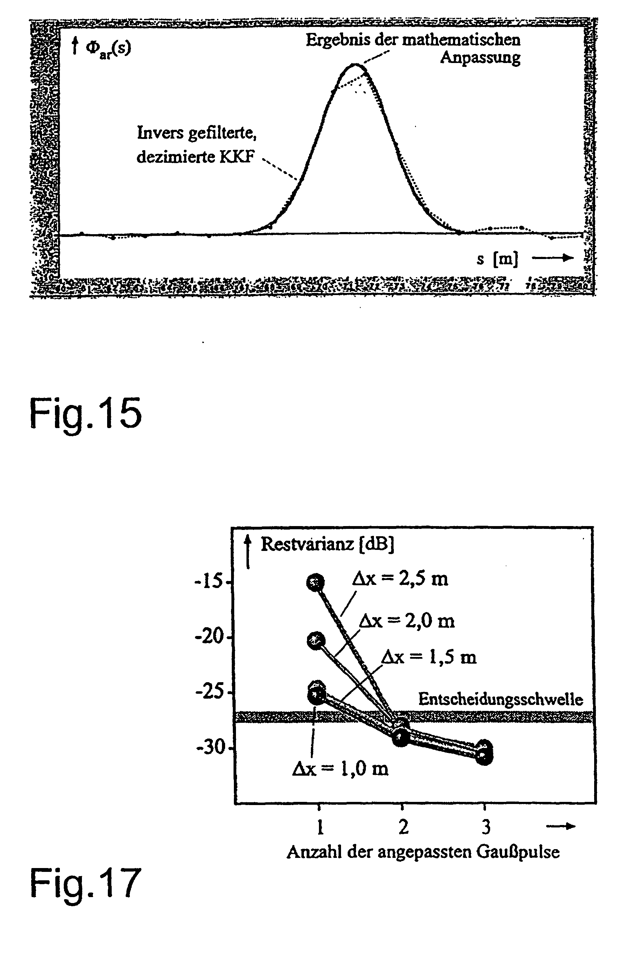

Fig.15 zeigt dazu die invers gefilterte und dezimierte Kreuzkorrelationsfunktion des in Fig.5b gezeigten Lidar-Impulses mit einem Rückstreusignal (gepunktete Linie). Die durchgezogene Linie zeigt das Ergebnis der Anpassung von Gauß-Impulsen, deren Breite durch die inverse Filterung vorgegeben ist. Der im Nullpunkt stehende Gauß-Impuls entspricht der AKF des Sendeimpulses. Der andere Impuls wird durch ein Netz verursacht, das sich in 18,8 m Entfernung vom Meßort befindet.

Im folgenden wird die Rückstreuung mehrerer Hart-Targets erläutert.

Durch die inverse Filterung des Kreuzenergiespektrums ist gewährleistet, daß die KKF je nach Anzahl der Streuobjekte aus einer Folge von zeitlich verschobenen Gauß-Impulsen mit definierter Breite besteht. Die Anpassungsparameter beziehen sich ausschließlich auf die Amplituden Ai und die Position xi der diskreten Rückstreuobjekte. Bei der Realisierung der mathematischen Anpassung (Marquart Nonlinear Least Square Fit) müssen die Startparameter hinreichend genau festgelegt werden, um die Anzahl der Iterationsschritte zu minimieren.

Die Startwerte eines Streuobjekts lassen sich aus der diskreten Kreuzkorrelationsfunktion $\Phi_{ar}(n)$ durch Auffinden des Maximalwerts A0 mit dem entsprechenden Verschiebungswert $x_0 = n_0 \cdot \Delta x$ ermitteln. Die Genauigkeit der Schätzwerte ist zwar durch die zeitliche Quantisierung T der Abtastung beziehungsweise der räumlichen Auflösung $\Delta x$ der diskreten KKF begrenzt, reicht jedoch für den mathematischen Anpassungsalgorithmus vollständig aus. Aus den Schätzwerten wird ein Gauß-Impuls $f_0(n)$ mit der durch die inverse Filterung vorgegebenen Breite B und den beiden Startwerten A0 und x0 an den diskreten Stützstellen $x_n = n \cdot \Delta x$ für den Iterationsschritt i = 0 nach folgender Formel berechnet:

$$f_i(n) = A_i \cdot \exp\left(-2 \cdot \left(\frac{n \cdot \Delta x - x_i}{B}\right)^2\right). \qquad (9)$$

Das Datenfeld $f_0(n)$ wird nun von der diskreten Kreuzkorrelationsfunktion $\Phi_{ar}(n)$ subtrahiert. Aus dem Differenzsignal $\Phi_{ar,0}(n) = \Phi_{ar}(n) - f_0(n)$ ergibt sich die Varianz $\sigma_0^2$. Dieser Wert wird mit einem Schwellwert S verglichen, der in der Größenordnung der Varianz $\sigma_r^2$ des reinen Rauschuntergrundes liegt.

Bei $\sigma_0^2 > S$ wird das Verfahren auf der Basis des Differenzsignals $\Phi_{ar,0}(n)$ wiederholt: Dessen Maximalwert $A_1$ mit der entsprechenden Position $x_1$ dient nun zur Berechnung eines weiteren diskreten Gauß-Impulses $f_1(n)$ gemäß Gleichung (9) mit dem Iterationsindex i = 1. Anschließend wird das Differenzsignal $\Phi_{ar,1}(n) = \Phi_{ar,0}(n) - f_1(n)$ gebildet und dessen Varianz $\sigma_1^2$ ermittelt. Für $\sigma_1^2 > S$ wird das Verfahren fortgesetzt, andernfalls abgebrochen.

Die Wertepaare $\{A_i, x_i\}$ dienen nun als Startwerte für die mathematische Anpassung der Gauß-Impulse. Im ersten Schritt wird ein einziger Gauß-Impuls mit den Schätzwerten $\{A_0, x_0\}$ an die diskrete KKF angepaßt. Man geht somit von der Annahme aus, daß ein einziges Hart-Target vorhanden ist und speichert neben den optimalen Fitparametern $\{A_{0,0}, x_{0,0}\}$ auch die Restvarianz $\sigma_0^2$ zwischen der mathematischen Funktion und der diskreten KKF ab. Im nächsten Schritt wird die Existenz von zwei Hart-Targets angenommen.

Die Anpassung zweier Gauß-Impulse mit den Startwerten $\{\{A_{1,0}, x_{1,0}\}, \{A_{1,1}, x_{1,1}\}$ führt zu einer Verringerung der Varianz $\sigma_1^2$ gegenüber $\sigma_0^2$. Als Kriterium für die Existenz eines weiteren Streuzentrums verwendet man jenen Schwellwert S für die Varianz, der ausschließlich durch den Rauschanteil der invers gefilterten AKF des Sendeimpulses vorgegeben ist. Die Wiederholung der Anpassung unter Hinzunahme eines weiteren Streuzentrums wird dann beendet, wenn die erreichte Restvarianz die vorgegebene Schwelle unterschreitet.

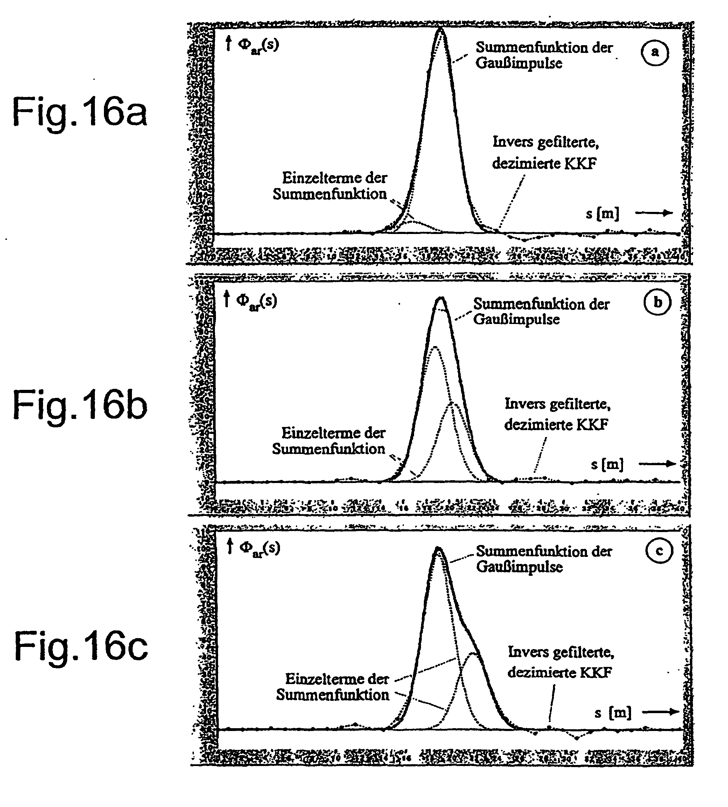

Anhand der Fig.16a, 16b und 16c wird die mit der inversen Filterung der KKF erreichbare räumliche Auflösung von Streuobjekten mit 2 Netzen demonstriert. Die in Fig.16a gezeigte KKF basiert auf einem Abstand der Netze von $\Delta x = 1$ m. Fig.16b zeigt das Ergebnis einer Messung beim Abstand $\Delta x = 2$ m. Erst bei einem der Fig.16c zugrunde liegenden Abstand von $\Delta x = 3$ m läßt sich die Existenz des zweiten Remissionsobjekts aus dem Verlauf der Meßpunkte visuell erahnen.

Aus der invers gefilterten und um den Faktor 8 dezimierten KKF des Rückstreusignals und des Sendeimpulses wird das zweite Netz auch beim Abstand von $\Delta x = 1$ m noch sicher identifiziert. Als Kriterium für die Existenz eines zweiten Remissionsobjekts dient die Restvarianz bei der mathematischen Anpassung der Gauß-Impulse.

Fig.17 zeigt die durch mathematische Anpassung von Gauß-Impulsen erzielte Restvarianz als Funktion der Gauß-Impulse. Die Kreuzkorrelationsfunktionen basieren auf Remissionssignalen von zwei Netzen im Abstand $\Delta x$. Die bei der mathematischen Anpassung erzielte Restvarianz bezieht sich auf die Signalenergie der KKF. Die Restvarianz reduziert sich mit der Anzahl der Gauß-Impulse, die für die mathematische Anpassung verwendet werden.

Legt man unter den gegebenen Bedingungen die Entscheidungsschwelle auf -27 dB, so kann man bis zu einem Netzabstand von $\Delta x = 1$ m die beiden Rückstreuereignisse sicher voneinander separieren. Die Ortsauflösung sinkt zwar mit abnehmenden Signal-Rausch-Verhältnis, dennoch läßt sich eine Separation der Streuobjekte weit unterhalb der Impulsbreite der Lidar-Signale erreichen.

| 1 | Sender |
|---|---|
| 2 | Empfänger |
| 3 | Wandelungselektronik |
| 4 | Lichtimpulse |
| 5 | Laser-Entfernungsmesser (LEM) |
| 6, 7 | Netze |
| 8 | Schneller Digitalisierer |
| 9 | Personal Computer |
| 10 | Sichtgerät |
| 11 | Drucker |

**Patentansprüche**

1. Verfahren zur Messung der Entfernung von Objekten, atmosphärischen Partikeln und dergleichen in einem lichtstrahlungsdurchlässigen Medium mittels Lidar- oder Laserradar-Signalen, die jeweils nach vorhergehender Laser-Impulsaussendung als reflektierte oder rückgestreute Signale empfangen werden und die genauso wie die Formen der jeweils ausgesendeten Impulse abgetastet und digitalisiert werden, **dadurch gekennzeichnet, daß** die Kreuzkorrelationsfunktion des abgetasteten und digitalisierten reflektierten bzw. rückgestreuten empfangenen Signals (Remissionssignal) mit dem vorher ausgesendeten, abgetasteten und digitalisierten Ausgangsimpuls einer inversen Filterung auf der Basis des Autoenergiespektrums der individuellen Ausgangsimpulse unter Verwendung eines Signalmodells auf der Basis von Gauß-Funktionen unterzogen wird und daß diskrete Korrekturfaktoren aus dem Autoenergiespektrum des Ausgangsimpulses gewonnen und zur Korrektur des Betrags des Kreuzenergiespektrums genutzt werden, so daß die Kreuzkorrelationsfunktion als Folge von Gauß-Impulsen definierter Breite erscheint und jeweils an der Position eines Reflexions- oder Rückstreuereignisses einen Gauß-Impuls mit definierter Breite aufweist.

2. Verfahren nach Anspruch 1, **dadurch gekennzeichnet, daß** aus dem digitalisierten Ausgangsimpuls zunächst das Autoenergiespektrum mit Hilfe der FFT (Fast Fourier Transformation) berechnet wird, daß in den relevanten Spektralbereich eine Gauß-Funktion gelegt wird, deren Breite so angepaßt wird, daß eine gute Annäherung an die vorliegenden Daten erreicht wird, daß dann für jeden diskreten Spektralwert ein Korrekturfaktor berechnet wird, der die Abweichung der Meßdaten vom Verlauf der mathematischen Funktion dokumentiert, daß das gaußförmige Energiespektrum ein Fourier-Paar mit einer ebenfalls gaußförmigen Autokorrelationsfunktion (AKF) bildet, deren Breite dann eindeutig definiert ist, daß aus den Fourier-Spektren des digitalisierten Remissionssignals und des Ausgangsimpulses in einem weiteren Schritt das Kreuzenergiespektrum berechnet wird, das ein Fourier-Paar mit der Kreuzkorrelationsfunktion bildet, daß der Betrag des Kreuzenergiespektrums unter Zuhilfenahme der zuvor berechneten Korrekturfaktoren in der Weise korrigiert wird, daß die Kreuzkorrelationsfunktion (KKF) als Summe von definierten, zeitlich versetzten Gauß-Impulsen betrachtet werden kann, daß zur Reduzierung des Rauschanteils und der Meßdaten der obere Spektralbereich des Kreuzenergiespektrums entfernt wird, daß an die invers gefilterte Kreuzkorrelationsfunktion (KKF) jeweils eine unterschiedliche Anzahl von Gauß-Impulsen mit der vorgegebenen Breite in einer iterativ ausführbaren Fitting-Prozedur angepaßt wird und daß dabei als Kriterium für die Anzahl der Remissionsobjekte die Varianz gilt und somit neben der Anzahl der Remissionsobjekte deren Amplitude und deren Position erhalten werden.

3. Verfahren nach Anspruch 1, **gekennzeichnet durch** eine unter Verwendung von Algorithmen durchführbare Umwandlung der Folge von Gauß-Impulsen in eine Folge von diskreten Streuereignissen zuordenbaren Dirac-Impulsen oder diracähnlichen Impulsen.

4. Verfahren nach Anspruch 3, **dadurch gekennzeichnet, daß** die Lage der Dirac-Impulse bzw. der diracähnlichen Impulse im Lidar- oder Laserradar-Empfangssignal die genaue Position von Hart-Targets angibt bzw. die Position der diskreten Streuzentren eines Wolkensignals wiedergibt.

5. Verfahren nach einem der vorhergehenden Ansprüche, **dadurch gekennzeichnet, daß** als Medium Glasfasern verwendet werden, in denen zur Diagnose eine Messung der Entfernung von Fehlstellen, z.B. von Brechgittern, vorgenommen wird.

**6.** Verfahren nach einem der vorhergehenden Ansprüche, **gekennzeichnet durch** eine analoge Anwendung des Meßprinzips bei Pulsradar.

**7.** Verfahren nach einem der Ansprüche 1 bis 5, **gekennzeichnet durch** eine analoge Anwendung des Meßprinzips bei der Entfernungsmessung mit Hilfe von Schall- oder Ultraschallimpulsen, z.B. bei Sonar.

**Claims**

**1.** A method of range-finding objects, atmospheric particles and the like in a medium transparent to a light beam by means of lidar or laser radar signals, each of which following prior laser pulse emission is detected as a reflected or backscattered signal and which is sampled and digitized exactly as formed in each emitted pulse, comprising the steps of

- inversely filtering the cross-correlation function of the sampled and digitized reflected or backscattered signal as detected (reemission signal) with the previously emitted sampled and digitized output pulse on the basis of the autoenergy spectrum of the individual output pulse in making use of a signal model on the basis of Gaussian functions,
- obtaining discrete correction factors from said autoenergy spectrum of said individual output pulse and
- employing said discrete correction factors for correcting the component of the cross-energy spectrum so that the cross-correlation function appears as a train of Gaussian pulses of defined width and comprising at the position of a reflection or backscatter event a Gaussian pulse of defined width.

**2.** The method as set forth in claim 1 comprising the further steps of

- computing from said digitized output pulse firstly said autoenergy spectrum with the aid of the fast Fourier transformation (FFT),
- inserting in the relevant spectral range a Gaussian function whose width is adapted so that a good approximation to the existing data is achieved,
- then computing for each discrete spectral value a correction factor documenting the deviation of said sensed data from the profile of said mathematical function,
- said Gaussian energy spectrum forming a Fourier pair including a likewise Gaussian autocorrelation function (ACF), the width of which is then uniquely defined,
- computing from the Fourier spectra of said digitized reemission signal and said output pulse said cross-energy spectrum forming a Fourier pair with said cross-correlation function,
- correcting the component of said cross-energy spectrum with the assistance of the previously computed correction factors such that said cross-correlation function can be considered as the sum of defined Gaussian pulses staggered in time,
- removing the upper spectral range of said cross-energy spectrum to reduce the noise component and the sensed data,
- fitting in an iterative implementable fitting procedure a differing number of Gaussian pulses of predefined width in each case to said inverse filtered cross-correlation function (CCF) and,
- in that the variance applies as the criterion for the number of reemission objects, obtaining in addition to their number also the amplitude and position of said reemission objects.

**3.** The method as set forth in claim 1, **characterized by** the step of converting said train of Gaussian pulses into a train of dirac or dirac-like pulses assignable to discrete scatter events being implementable by making use of algorithms.

**4.** The method as set forth in claim 3, **characterized in that** the location of said dirac or dirac-like pulses in said lidar or laser radar detected signal indicates the precise position of hard targets or represents the position of discrete scatter centers of a cloud signal.

**5.** The method as set forth in any of the preceding claims, **characterized in that** optical fibers are used as said medium in which the diagnosis involves sensing the distance of vacancies, e.g. of lattice displacements.

**6.** The method as set forth in any of the preceding claims, **characterized by** an analog application of said sensing principle in pulse radar.

7. The method as set forth in any of the claims 1 to 5 **characterized by** an analog application of said sensing principle in sonic or ultrasonic, e.g. sonar ranging.

**Revendications**

1. Procédé pour mesurer la distance d'objets, de particules atmosphériques et similaires dans un milieu perméable aux radiations lumineuses au moyen de signaux lidar ou radar à laser qui à chaque fois sont reçus comme signaux réfléchis ou rétrodiffusés suite à une émission d'impulsion laser et qui sont balayés et numérisés de la même manière que les formes de chacune des impulsions émises, **caractérisé en ce que** la fonction de corrélation croisée du signal numérisé réfléchi ou rétrodiffusé (signal de réflectance) reçu avec l'impulsion de sortie préalablement émise, balayée et numérisée est soumis à un filtrage inverse sur la base du spectre autoénergétique des impulsions de sortie individuelles en utilisant un modèle de signaux sur la base de fonctions de Gauss et qu'on obtient des facteurs de correction discrets à partir du spectre autoénergétique de l'impulsion de sortie, lesquels sont utilisés pour corriger la valeur du spectre d'énergie croisée, de sorte que la fonction de corrélation croisée est le résultat de largeurs d'impulsions de Gauss et présente à chaque fois, sur la position d'un événement de réflexion ou de rétrodiffusion, une impulsion de Gauss avec une largeur définie.

2. Procédé selon la revendication 1 **caractérisé en ce que**, à partir de l'impulsion de sortie numérisée, on calcule d'abord le spectre autoénergétique à l'aide de la transformation de Fourier rapide, **en ce qu'**on détermine dans le domaine spectral concerné une fonction de Gauss dont la largeur est choisie de telle sorte qu'on obtienne une bonne approximation des données disponibles, **en ce qu'**on calcule ensuite pour chacune des valeurs spectrales discrètes un facteur de correction qui donne des informations sur l'écart entre les données mesurées et le tracé de la fonction mathématique, **en ce que** le spectre énergétique qui présente des caractéristiques de Gauss forme une paire de Fourier avec une fonction d'autocorrélation (FAC) qui présente elle aussi des caractéristiques de Gauss et dont la largeur est ensuite définie de façon univoque, **en ce qu'**on calcule au cours d'une étape ultérieure, à partir des spectres de Fourier du signal de réflectance numérisé et de l'impulsion de sortie, le spectre d'énergie croisée qui forme une paire de Fourier avec la fonction de corrélation croisée, **en ce qu'**on corrige la valeur du spectre d'énergie croisée à l'aide du facteur de correction préalablement calculé de telle sorte que la fonction de corrélation croisée (FCC) peut être considérée comme la somme d'impulsions de Gauss définies et retardées, **en ce que** le domaine spectral supérieur du spectre d'énergie croisée est éliminé pour réduire le bruit et les données de mesure, **en ce que** sur la fonction de corrélation croisée (FCC) inversement filtrée on adapte à chaque fois un nombre différent d'impulsions de Gauss ayant la largeur prédéterminée au cours d'une adaptation itérative et **en ce que** la variance constitue alors le critère du nombre d'objets de réflectance et qu'on obtient ainsi, outre le nombre des objets de réflectance, leur amplitude et leur position.

3. Procédé selon la revendication 1 **caractérisé par** une transformation, réalisable au moyen d'algorithmes, de la séquence d'impulsions de Gauss en une séquence discrète d'événements de diffusion qu'on peut répartir en impulsions de Dirac ou en impulsions comparables à celles de Dirac.

4. Procédé selon la revendication 3 **caractérisé en ce que** l'état des impulsions de Dirac ou des impulsions comparables à celles de Dirac dans le signal de réception lidar ou radar à laser donne la position exacte de la cible dure ou reproduit la position des centres de diffusion discrets d'un signal de nuages.

5. Procédé selon l'une des revendications précédentes **caractérisé en ce qu'**on utilise comme milieu des fibres de verre dans lesquelles on réalise dans un but de diagnostic une mesure de la distance des défauts par exemple des grilles de réfraction.

6. Procédé selon l'une des revendications précédentes **caractérisé par** une utilisation analogique du principe de mesure au moyen d'un radar pulsé.

7. Procédé selon l'une des revendications 1 à 5 **caractérisé par** une utilisation analogique du principe de mesure au moyen de la mesure de la distance à l'aide d'impulsions acoustiques ou ultrasonores, par exemple au moyen d'un sonar.

# Fig.1

# Fig.2

Atmosphärische Aerosole
Rückstreuung $\beta(R)$

a b c d e f

2 3 1

$t_i$

1 2 3

Laser

2 3 1

$t_0$

Detektor

$t_r$

Fig.3

EP 1 085 346 B1

Ausgangsimpuls

Rückstreusignal

FFT

FFT

Energiespektrum

Signalmodell + Modellparameter

Kreuzenergiespektrum

Korrekturwerte

Korrigiertes Spektrum + Downsampling

IFFT

**Fig. 4**

Inversgefilterte KKF

Signalmodell + Modellparameter

Fit

Anzahl N der Rückstreuereignisse nach Kriterien "Varianz"
$\Rightarrow$ Amplitude $A_i$ und Entfernung $\Delta x_i$ für $i = 0$ bis N-1

EP 1 085 346 B1

Fig.5a

Fig.5b

19

# Fig.6

# Fig.7b

# Fig.7a

Fig.8

Fig.9a

Fig.9b

Fig.10

EP 1 085 346 B1

Fig.11a

Fig.11b

Fig.12

# Fig.13

Fig.14

EP 1 085 346 B1

Fig.15

Fig.17

Fig.16a

Fig.16b

Fig.16c